# FASCICULE DE BREVET EUROPEEN

(11) **EP 0 998 404 B1**
(45) Date de publication et mention de la délivrance du brevet: **06.04.2005**
(21) Numéro de dépôt: 99936052.2
(22) Date de dépôt: 26.02.1999
(51) Int. Cl.: B60S 1/04, B60S 1/34

(54) **DISPOSITIF D'ESSUYAGE POUR VEHICULE AUTOMOBILE COMPORTANT UNE PLATINE DE FIXATION**
KRAFTFAHRZEUG-SCHEIBENWISCHERANLAGE MIT EINER HALTEPLATTE
MOTOR VEHICLE WIPER DEVICE COMPRISING A FIXING PLATE

(30) Priorité: 27.02.1998 FR 9802387
(43) Date de publication de la demande: 10.05.2000
(73) Titulaire: VALEO SYSTEMES D'ESSUYAGE, 78321 La Verrière (FR)
(72) Inventeur: EUSTACHE, Jean-Pierre, F-92160 Antony (FR)
(74) Mandataire: Lemaire, Marc
(86) Numéro de dépôt international: PCT/FR1999/000443
(87) Numéro de publication internationale: WO 1999/043521

(56) Documents cités:
- DE-A- 4 328 652
- US-A- 5 706 547
- PATENT ABSTRACTS OF JAPAN vol. 011, no. 316 (M-631), 15 octobre 1987 & JP 62 099244 A (MAZDA MOTOR CORP), 8 mai 1987

## Description

L'invention concerne un dispositif d'essuyage pour véhicule automobile.

L'invention concerne plus particulièrement un dispositif d'essuyage pour véhicule automobile comportant au moins une platine de guidage en rotation et de fixation d'un arbre qui s'étend axialement vers l'extérieur de manière que son extrémité libre entraîne un essuie-glace en balayage alterné, du type dans lequel la platine comporte un fût dans lequel l'arbre d'entraînement est guidé en rotation, et une semelle transversale pour sa fixation sur la caisse du véhicule par l'intermédiaire d'un bloc amortisseur en matériau déformable élastiquement, le bloc amortisseur étant monté dans un logement complémentaire pratiqué dans la semelle, ou pratiqué dans la caisse du véhicule.

Une telle platine constitue un mécanisme classique de fixation du dispositif d'essuyage sur la caisse du véhicule.

Le dispositif telle que décrit précédemment est connu du document DE-A-43.28.652.

En cas de collision du véhicule avec un piéton, la partie du mécanisme d'essuie-glace qui s'étend à l'extérieur du véhicule constitue un objet contondant qui risque de provoquer des blessures.

On a aussi remarqué qu'en cas d'accident violent, le dispositif d'essuyage, qui est agencé dans le compartiment moteur à proximité de l'habitacle, pouvait pénétrer à l'intérieur de l'habitacle par la baie de pare-brise sous l'effet du choc.

L'intrusion accidentelle d'un élément aussi massif se révèle alors dangereux pour la sécurité des passagers et il est donc apparu nécessaire de mieux prévoir le comportement du dispositif d'essuyage en cas de choc violent.

Afin de remédier à ces inconvénients, l'invention propose un dispositif d'essuyage du type vu précédemment, caractérisé en ce que le logement (42) est ouvert partiellement selon une direction sensiblement parallèle à l'axe (X-X) de l'arbre d'entraînement (22) de manière à permettre, en cas d'impact violent, l'échappement du bloc amortisseur (34) hors de son logement (42) pour obtenir l'effacement axial de la semelle (32), du fût de guidage (28) et de l'arbre d'entraînement (22).

Selon des modes de réalisation de l'invention :
- la semelle est en forme de plaque et s'étend dans un plan sensiblement parallèle à l'axe de l'arbre d'entraînement ;
- le logement est formé dans la semelle sous la forme d'une découpe de contour circulaire qui est ouvert radialement en direction d'un bord de la semelle ;
- le bloc amortisseur est relié à la caisse du véhicule, ou à la semelle par une tige de fixation, et la tige de fixation s'étend selon une direction sensiblement perpendiculaire à l'axe de l'arbre d'entraînement ;
- la tige de fixation comporte une zone d'amorce de rupture à section résistante réduite ;
- la platine est réalisée en une seule pièce, notamment par moulage.

L'invention propose aussi une platine réalisée conformément aux enseignements de l'invention.

D'autres caractéristiques et avantages de l'invention apparaîtront à la lecture de la description détaillée qui suit pour la compréhension de laquelle on se reportera aux dessins annexés dans lesquels:

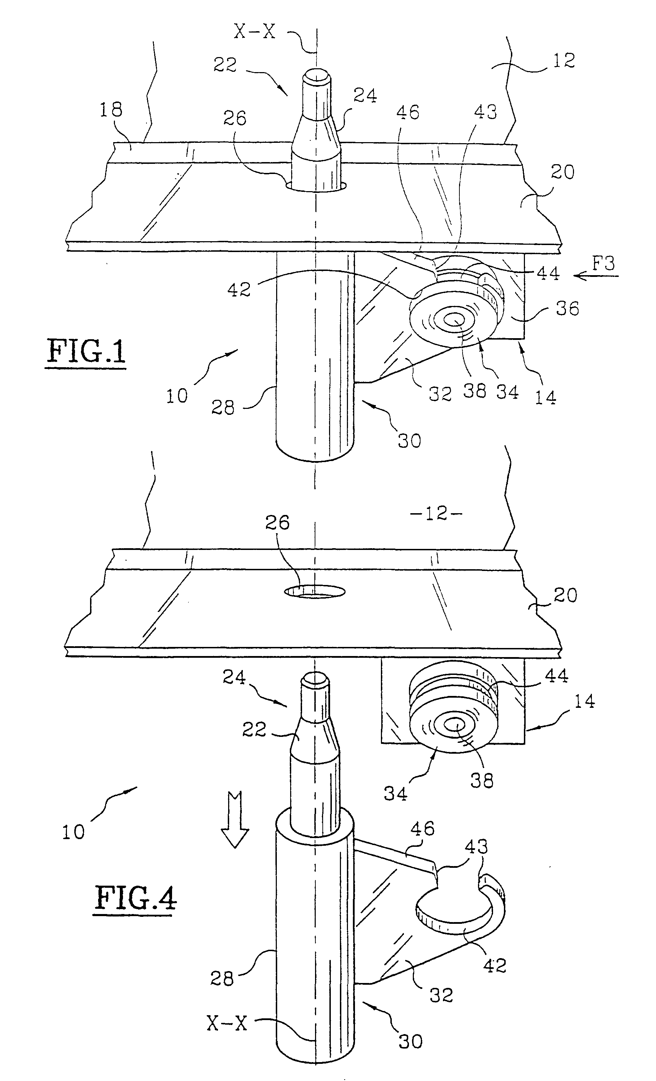

- la figure 1 est une vue schématique en perspective, selon la flèche F1 de la figure 3 qui illustre un exemple de réalisation d'un dispositif d'essuyage conforme aux enseignements de l'invention ;
- la figure 2 est une vue similaire à celle de la figure 1 selon la flèche F2 de la figure 3 ;
- la figure 3 est une vue latérale, en section partielle, selon la flèche F3 de la figure 1 ; et
- la figure 4 est une vue similaire à celle de la figure 1 sur laquelle l'arbre d'entraînement et la platine de guidage et de fixation sont illustrés en position effacée axialement.

On a représenté sur les figures certains composants appartenant à un dispositif 10 pour l'essuyage d'une vitre 12 telle qu'un pare-brise de véhicule automobile ou qu'une vitre arrière. Le pare-brise 12 est monté sur la caisse d'un véhicule automobile dont on a représenté sur les figures un élément de structure creux 14 en forme de traverse qui comporte un rebord 16 sur lequel prend appui la vitre de pare-brise 12 qui est aussi reçue entre un bord plié en vis-à-vis 18 d'une tôle de carrosserie 20.

Le dispositif d'essuyage 10 comporte un arbre rotatif 22, de conception générale connue, dont l'extrémité libre supérieure 24 fait saillie verticalement à l'extérieur à travers un trou 26 de la tôle 20 et est conçue pour recevoir un bras d'essuie-glace (non représenté) qu'il entraîne en rotation pour provoquer un balayage alterné de la vitre 12 par l'essuie-glace.

L'arbre d'entraînement 22 est monté à rotatif, autour de son axe X-X, dans un fût de guidage 28 de conception générale connue qui est illustré schématiquement et qui appartient à une platine 30 du dispositif d'essuie-glace.

Outre le fût 28, la platine 30 comporte une semelle 32 pour la fixation du dispositif 10 sur l'élément de structure 14 de la caisse du véhicule.

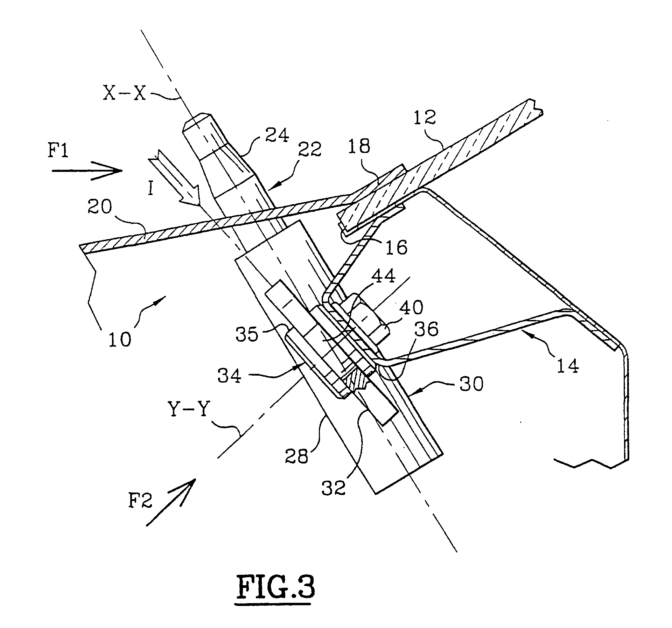

La platine 32 est un élément en forme de plaque, qui est par exemple réalisé venu de matière par moulage avec le fût 28 et qui s'étend dans un plan qui est ici sensiblement parallèle à l'axe X-X de rotation de l'arbre d'entraînement 22 (voir figure 3).

Selon une conception générale connue, afin notamment d'amortir les vibrations, la semelle 32 est fixée à l'élément de structure 14 par l'intermédiaire d'un bloc amortisseur 34 qui est par exemple un bloc de forme générale cylindrique en matériau élastomère.

Le bloc 34 s'étend selon un axe Y-Y sensiblement perpendiculaire au plan de la semelle 32 et au plan d'une face d'appui 36 appartenant à l'élément de structure 14.

Le bloc amortisseur 34 peut être fixé à l'élément 14 par tout moyen connu.

Il est notamment connu de réaliser le bloc 34 sous la forme d'un élément en matériau élastomère surmoulé autour d'une tige axiale de fixation 38 dont le corps (non représenté sur les figures) traverse un trou complémentaire de la face 36 et présente une extrémité libre filetée qui est montée vissée dans un écrou interne soudé 40 de l'élément de structure 14.

Conformément aux enseignements de l'invention, le bloc amortisseur 34 est monté dans un logement complémentaire 42 de la semelle 32.

Plus précisément, le logement 42 est un trou de contour circulaire dont les dimensions correspondent à celles d'une gorge 44 formée dans la paroi cylindrique latérale 35 du bloc amortisseur 34.

Conformément aux enseignements de l'invention, le trou ou logement 42 est ouvert radialement vers l'extérieur, c'est-à-dire qu'il débouche par son ouverture 43 dans un bord 46 de la plaque formant semelle 32.

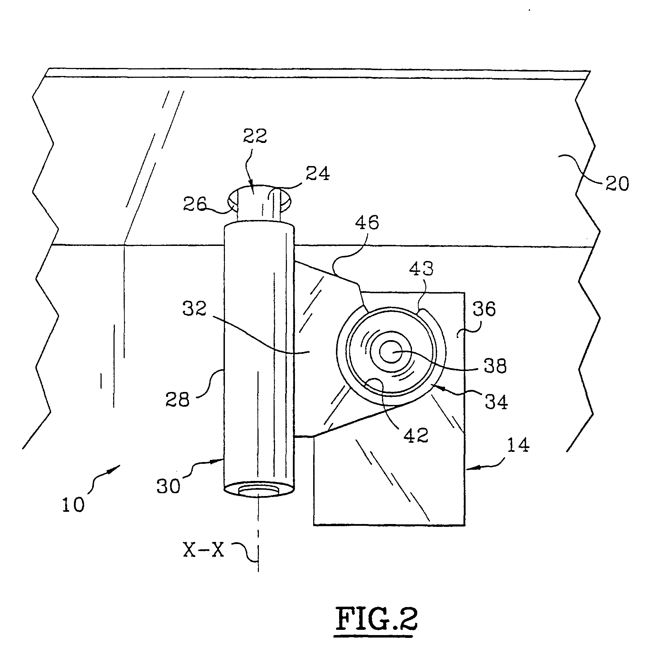

Comme on peut le voir plus particulièrement aux figures 2 et 4, le logement circulaire 42 est ouvert selon une direction parallèle à l'axe X-X et en direction de l'extrémité libre supérieure 24 de l'arbre d'entraînement 22.

Le dimensionnement de l'ouverture 43 du logement circulaire 42 est tel qu'il permet d'une part le montage à force selon la direction radiale et par compression du matériau élastomère constitutif du bloc amortisseur 34 de ce dernier dans le logement 42, de façon à permettre la fixation de la semelle 32 et donc de la platine 30 au moyen de la vis 38 sur l'élément de structure 14.

Les dimensions de l'ouverture 43 et la conception du bloc amortisseur 34 permettent aussi, conformément aux enseignements de l'invention, de déboîter le bloc amortisseur 34 hors de son logement 42 en cas d'impact sur l'arbre de transmission 24, c'est-à-dire en cas d'impact appliqué sur son extrémité libre supérieure 24 globalement sensiblement selon la direction I indiquée à la figure 3.

Ce type d'impact se produit notamment en cas de collision du véhicule avec un piéton dont le corps vient percuter l'essuie-glace et applique donc ainsi un effort d'impact au mécanisme d'essuie-glace, et donc à la platine 30, selon une direction sensiblement parallèle à l'axe X-X et au plan de la plaque 32 aboutissant à un échappement du bloc amortisseur 34 hors du logement 42.

Du fait de cet échappement, l'ensemble de la platine 30 est "déboîté" et peut s'effacer axialement vers l'intérieur de manière que l'extrémité libre de l'arbre de transmission 22, et l'essuie-glace dont est équipé, ne constituent plus un objet contondant susceptible de provoquer des blessures importantes.

Selon une autre caractéristique de l'invention (non représentée sur les figures), il est aussi possible de prévoir que la tige 38 de fixation du bloc amortisseur 34 sur l'élément de structure 14 comporte une zone d'amorce de rupture à section résistante réduite de manière à provoquer un autre type de désolidarisation de la platine 30 par rapport à l'élément de structure 14, notamment lorsque la direction de l'impact ne permet pas l'échappement du bloc 34 par l'ouverture 43 et/ou en cas de collision du véhicule avec un autre véhicule, l'énergie absorbée provoquant alors la rupture de la tige 38 afin d'éviter que l'ensemble du dispositif d'essuie-glace ne pénètre dans l'habitacle du véhicule.

## Revendications

1. Dispositif d'essuyage (10) pour véhicule automobile comportant au moins une platine (30) de guidage en rotation et de fixation d'un arbre (22) qui s'étend axialement (X-X) vers l'extérieur de manière que son extrémité libre (24) entraîne un essuie-glace en balayage alterné, du type dans lequel la platine (30) comporte un fût (28) dans lequel l'arbre d'entraînement est guidé en rotation, et une semelle transversale (32) pour sa fixation sur la caisse (14) du véhicule par l'intermédiaire d'un bloc amortisseur en matériau déformable élastiquement, le bloc amortisseur (34) étant monté dans un logement complémentaire (42) pratiqué dans la semelle (32), ou pratiqué dans la caisse du véhicule, **caractérisé en ce que** le logement (42) est ouvert partiellement selon une direction sensiblement parallèle à l'axe (X-X) de l'arbre d'entraînement (22) de manière à permettre, en cas d'impact violent, l'échappement du bloc amortisseur (34) hors de son logement (42) pour obtenir l'effacement axial de la semelle (32), du fût de guidage (28) et de l'arbre d'entraînement (22).

2. Dispositif selon la revendication précédente, **caractérisé en ce que** la semelle (32) est en forme de plaque et s'étend dans un plan sensiblement parallèle à l'axe de l'arbre d'entraînement (22).

3. Dispositif selon la revendication précédente, **caractérisé en ce que** le logement (42) est formé dans la semelle (32) sous la forme d'une découpe de contour circulaire qui est ouvert radialement (43) en direction d'un bord (46) de la semelle (32).

4. Dispositif selon l'une quelconque des revendications précédentes, **caractérisé en ce que** le bloc amortisseur (34) est relié à la caisse du véhicule, ou à la semelle par une tige de fixation (38), et **en ce que** la tige de fixation s'étend selon une direction (Y-Y) sensiblement perpendiculaire à l'axe (X-X) de l'arbre d'entraînement.

5. Dispositif selon la revendication précédente, **caractérisé en ce que** la tige de fixation (38) comporte une zone d'amorce de rupture à section résistante réduite.

6. Dispositif d'essuyage selon l'une quelconque des revendications précédentes, **caractérisé en ce que** la platine (30) est réalisée en une seule pièce, notamment par moulage.

7. Platine (30) de guidage en rotation et de fixation d'un arbre d'entraînement (22) d'un essuie-glace de véhicule automobile, destinée à être fixée à la caisse de véhicule par l'intermédiaire d'un bloc amortisseur en matériau déformable élastiquement, la platine comportant une semelle (32) comprenant un logement (42) destiné à recevoir un bloc amortisseur, **caractérisée en ce que** le logement est ouvert partiellement selon une direction sensiblement parallèle à l'axe (X-X) de l'arbre d'entraînement (22) de manière à permettre, en cas d'impact violent, l'échappement du bloc amortisseur (34) hors de son logement (42) pour obtenir l'effacement axial de la semelle (32), du fût de guidage (28) et de l'arbre d'entraînement (22).

8. Platine (30) de guidage en rotation et de fixation d'un arbre d'entraînement (22) d'un essuie-glace de véhicule automobile, destinée à être fixée à la caisse de véhicule par l'intermédiaire d'un bloc amortisseur en matériau déformable élastiquement, **caractérisé en ce que** la platine comporte une semelle (32) comprenant un bloc amortisseur, le bloc amortisseur destiné à être reçu dans un logement complémentaire pratiqué dans la caisse de véhicule et **en ce que** ce logement est ouvert partiellement selon une direction sensiblement parallèle à l'axe (X-X) de l'arbre d'entraînement (22) de manière à permettre, en cas d'impact violent, l'échappement du bloc amortisseur (34) hors de son logement (42) pour obtenir l'effacement axial de la semelle (32), du fût de guidage (28) et de l'arbre d'entraînement (22).

9. Platine (30) selon. la revendication 7 ou 8, **caractérisé en ce que** la semelle (32) est en forme de plaque et s'étend dans un plan sensiblement parallèle à l'axe de l'arbre d'entraînement (22).

10. Platine (30) selon l'une quelconque des revendications 7 à 9, **caractérisé en ce que** la platine (30) est réalisée en une seule pièce, notamment par moulage.

## Patentansprüche

1. Wischvorrichtung (10) für ein Kraftfahrzeug mit wenigstens einer Führungsplatine (30) in Rotation und zur Befestigung an einer Welle, die sich axial (X-X) nach außen erstreckt, so dass ihr freies Ende (24) einen alternierend wischenden Scheibenwischer von dem Typ antreibt, in dem die Platine (30) einen Schaft (28) umfasst, in dem die Welle in Rotation angetrieben wird, und eine transversale Sohle (32) für ihre Befestigung an der Karosserie (14) des Fahrzeugs mittels eines Dämpferblocks aus elastisch verformbarem Material, wobei der Dämpferblock (34) in einer in die Sohle (32) praktizierten komplementären Aufnahme (42) oder in der Karosserie des Fahrzeugs praktizierte Aufnahme montiert ist, **dadurch gekennzeichnet, dass** die Aufnahme (42) gemäß einer zur Achse (X-X) der Antriebswelle (22) wesentlich parallelen Richtung teilweise geöffnet ist, so dass bei einem starken Aufprall das Austreten des Dämpferblocks (34) aus seiner Aufnahme (42) zwecks Erhalt eines axialen Wegziehens der Sohle (32), des Führungsschaftes (28) und de Antriebswelle (22) erlaubt wird.

2. Vorrichtung gemäß dem vorherigen Anspruch, **dadurch gekennzeichnet, dass** die Sohle (32) die Form einer Platte aufweist und sich in einer zur Achse der Antriebselle (22) wesentlich parallelen Ebene erstreckt.

3. Vorrichtung gemäß dem vorherigen Anspruch, **dadurch gekennzeichnet, dass** die Aufnahme (42) in der Sohle (32) in Form eines Ausschnitts mit kreisförmigem Umriss gebildet wird, der radial in (43) in Richtung eines Randes (46) der Sohle (32) offen ist.

4. Vorrichtung gemäß einem der vorherigen Ansprüche, **dadurch gekennzeichnet, dass** der Dämpferblock (34) mit der Karosserie des Fahrzeugs oder mit der Sohle durch einen Befestigungsstift (38) verbunden ist und dass der Befestigungsstift sich gemäß einer zur Achse (X-X) der Antriebswelle wesentlich lotrechten Richtung (Y-Y) erstreckt.

5. Vorrichtung gemäß einem der vorherigen Ansprüche, **dadurch gekennzeichnet, dass** der Befestigungsstift (38) einen Sollbruchbereich mit einem Abschnitt geringer Festigkeit aufweist.

6. Wischvorrichtung gemäß einem der vorherigen Ansprüche, **dadurch gekennzeichnet, dass** die Platine (30) aus einem einzigen Stück realisiert ist, insbesondere durch Abformen.

7. Führungsplatine (30) in Rotation und zur Befestigung an einer Antriebswelle (22) eines Scheibenwischers für ein Kraftfahrzeug, die zur Befestigung an der Karosserie des Fahrzeugs mittels eines Dämpferblocks aus elastisch verformbarem Material bestimmt ist, wobei die Platine eine Sohle (32) mit einer Aufnahme (42) umfasst, die zur Aufnahme eines Dämpferblocks bestimmt ist, **dadurch gekennzeichnet, dass** die Aufnahme teilweise gemäß einer zur Achse (X-X) der Antriebswelle (22) wesentlich parallelen Richtung offen ist, so dass bei einem starken Aufprall das Austreten des Dämpferblocks (34) aus seiner Aufnahme (42) erlaubt wird, um das axiale Wegziehen der Sohle (32), des Führungsschaftes (28) und der Antriebswelle (22) zu erhalten.

8. Führungsplatine (30) in Rotation und zur Befestigung einer Antriebswelle (22) eines Scheibenwischers für ein Kraftfahrzeug, die zur Befestigung an der Karosserie des Fahrzeugs mittels eines Dämpferblocks aus elastisch verformbarem Material bestimmt ist, **dadurch gekennzeichnet, dass** die Platine eine Sohle (32) mit einem Dämpferblock umfasst, wobei der Dämpferblock zur Aufnahme in einer komplementären, in die Karosserie des Fahrzeugs praktizierte Aufnahme bestimmt ist und dass diese Aufnahme teilweise gemäß einer zur Achse (X-X) der Antriebswelle (22) wesentlich parallelen Richtung offen ist, so dass bei einem starken Aufprall das Austreten des Dämpferblocks (34) aus seiner Aufnahme (42) zwecks Erhalts des axialen Wegziehens der Sohle (32), des Führungsschaftes (28) und der Antriebswelle (22) erlaubt wird.

9. Platine (30) gemäß Anspruch 7 oder 8, **dadurch gekennzeichnet, dass** die Sohle (32) die Form einer Platte aufweist und sich in einer zur Achse der Antriebswelle (22) wesentlich parallelen Ebene erstreckt.

10. Platine (30) gemäß Anspruch 7 bis 9, **dadurch gekennzeichnet, dass** die Platine (30) aus einem einzigen Stück realisiert ist, insbesondere durch Abformen.

## Claims

1. A wiper device (10) for a motor vehicle comprising at least one plate (30) for the rotational guidance and fixing of a shaft (22) which extends axially (X-X) outwards so that its free end (24) drives a wiper in alternating sweep, of the type in which the plate (30) comprises a barrel (28) in which the drive shaft is guided in rotation, and a transverse sole plate (32) for fixing it to the bodywork (14) of the vehicle by means of a damper block made from elastically deformable material, the damper block (34) being mounted in a complementary housing (42) formed in the sole plate (32) or formed in the bodywork of the vehicle, **characterised in that** the housing (42) is open partially in a direction substantially parallel to the axis (X-X) of the drive shaft (22) so as to allow, in the event of violent impact, the escape of the damper block (34) out of its housing (42) in order to obtain the axial retraction of the sole plate (32), the guide barrel (28) and the drive shaft (22).

2. A device according to the preceding claim, **characterised in that** the sole plate (32) is in the form of a plate and extends in a plane substantially parallel to the axis of the drive shaft (22).

3. A device according to the preceding claim, **characterised in that** the housing (42) is formed in the sole plate (32) in the form of a cut-out with a circular contour which is open radially (43) in the direction of one edge (46) of the sole plate (32).

4. A device according to any one of the preceding claims, **characterised in that** the damper block (34) is connected to the body of the vehicle, or to the sole plate by a fixing rod (38), and **in that** the fixing rod extends in a direction (Y-Y) substantially perpendicular to the axis (X-X) of the drive shaft.

5. A device according to the preceding claim, **characterised in that** the fixing rod (38) comprises a rupture initiation area with a reduced stressed cross section.

6. A wiper device according to any one of the preceding claims, **characterised in that** the plate (30) is produced in a single piece, in particular by moulding.

7. A plate (30) for the rotational guidance and fixing of a drive shaft (22) of a motor vehicle wiper, intended to be fixed to the vehicle body by means of a damper block made from elastically deformable material, the plate comprising a sole plate (32) comprising a housing (42) intended to receive a damper block, **characterised in that** the housing is open partially in a direction substantially parallel to the axis (X-X) of the drive shaft (22) so as to allow, in the event of violent impact, the escape of the damper block (34) out of its housing (42) in order to obtain the axial retraction of the sole plate (22), the guide barrel (28) and the drive shaft (22).

8. A plate (30) for the rotational guidance and fixing of a drive shaft (22) of a motor vehicle wiper, intended to be fixed to the bodywork of the vehicle by means of a damper block made from elastically deformable material, **characterised in that** the plate comprises a sole plate (32) comprising a damper block, the damper block intended to be received in a complementary housing formed in the bodywork of the vehicle, and **in that** this housing is open partially in a direction substantially parallel to the axis (X-X) of the drive shaft (22) so as to allow, in the event of violent impact, the escape of the damper block (34) out of its housing (42) in order to obtain the axial retraction of the sole plate (32), the guide barrel (28) and the drive shaft (22).

9. A plate (30) according to claims 7 or 8, **characterised in that** the sole plate (32) is in the form of a plate and extends in a plane substantially parallel to the axis of the drive shaft (22).

10. A plate (30) according to any one of claims 7 to 9, **characterised in that** the plate (30) is produced in a single piece, in particular by moulding.
